# EUROPÄISCHE PATENTANMELDUNG

(11) **EP 1 764 741 A1**
(43) Veröffentlichungstag der Anmeldung: **21.03.2007**
(21) Anmeldenummer: 05020060.9
(22) Anmeldetag: 15.09.2005
(51) Int. Cl.: G06T 7/00

(54) **Verfahren zur Ermittlung der Qualität einer Aufnahme, welche von einer Digitalkamera, von einem eine Digitalkamera umfassenden oder von einem mit einer Digitalkamera verbindbaren elektronischen Gerät erstellt worden ist**

(71) Anmelder: Gkikas, Karolos, 166 75 Glyfada, Athen (GR); Hao, He, Eastwood NSW 2122 (AU)
(72) Erfinder: Gkikas, Karolos, 166 75 Glyfada, Athen (GR); Hao, He, Eastwood NSW 2122 (AU)
(74) Vertreter: Haft, von Puttkamer, Berngruber

(57) **Zusammenfassung**

Im Rahmen des Verfahrens zur Ermittlung der Qualität einer Aufnahme, welche mittels einer Digitalkamera, eines einer Digitalkamera umfassenden oder mittels eines mit einer Digitalkamera verbindbaren elektronischen Gerätes erstellt worden ist, wird zumindest ein kleiner Bereich ausgewählt, wobei Parameter, welche die Erkennung der Details einer Aufnahme beeinflussen, für den zumindest einen ausgewählten Bereich punktuell berechnet und über den ausgewählten Bereich integriert werden und wobei aus den für diese Parameter gewonnenen Werten ein Lesbarkeitsindex berechnet wird, welcher die gewichtete Summe der normierten gewonnenen Werte für die Parameter ist, wobei die Auswahl der Gewichtungsfaktoren der aktuellen in Digitalkameras verwendeten Technologie entspricht.

## Beschreibung

Die vorliegende Erfindung bezieht sich auf ein Verfahren zur Ermittlung der Qualität einer Aufnahme, welche mittels einer Digitalkamera, eines einer Digitalkamera umfassenden oder mittels eines mit einer Digitalkamera verbindbaren elektronischen Gerätes erstellt worden ist, gemäß dem Oberbegriff des Patentanspruchs 1.

Aus dem Stand der Technik ist beispielsweise bekannt, eine Digitalkamera bzw. eine Digitalkamera umfassende oder mit einer Digitalkamera verbindbare elektronische Geräte zum Scannen einer Text- und/oder Zeichnungen bzw. Skizzen umfassenden Oberfläche zu verwenden.

Hierbei wird üblicherweise eine digitale Aufnahme gestellt, welche die zu scannende Oberfläche umfasst, wobei die Text- und/oder Zeichnungen bzw. Skizzen der zu scannenden Oberfläche unter Beibehaltung deren räumlichen Anordnung an sich sowie zueinander in eine digitale Bilddatei übertragen werden; in vorteilhafter Weise werden, wenn dies möglich ist, die bei der Erstellung von der die zu scannende Oberfläche umfassenden Aufnahme auftretenden und das Bild beeinträchtigenden Effekte, umfassend geometrische Verzerrung, Unschärfe, Verschwommenheit, Schatten- und/oder Licht-Reflexionseffekte, digitales Rauschen, Kontrastmangel und/oder Farbenverzerrung entfernt bzw. kompensiert.

Bei Verwendung einer Digitalkamera bzw. von eine Digitalkamera umfassenden oder mit einer Digitalkamera verbindbaren elektronischen Geräten gibt es jedoch Effekte, die nicht zufriedenstellend kompensiert werden können, wie z.B. die Schärfe der Aufnahme, was die Aufnahmequalität unabhängig von der beabsichtigten Verwendung der Aufnahme (Urlaubsbild, gescannte Oberfläche) negativ beeinflusst.

Bei den aus dem Stand der Technik bekannten Geräten bzw. Verfahren kann z.B. das Problem auftreten, dass der Benutzer, d. h. die Person, welche die Aufnahme macht, anhand der Anzeige des aufgenommenen Bildes auf der Anzeigevorrichtung der Digitalkamera oder beispielsweise des die Kamera umfassenden Mobiltelefons nicht abschätzen kann, ob die Aufnahmequalität ausreichend ist.

Dies ist insbesondere von Bedeutung, wenn die Aufnahme zum Zweck des Scannens einer Text- und/oder Zeichnungen bzw. Skizzen umfassenden Oberfläche erstellt worden ist, da die Details der zu scannenden Oberfläche nicht zufriedenstellend wiedergegeben werden.

Dies kann insbesondere der Fall sein, wenn ein Mobiltelefon oder eine Digitalkamera ohne Stativ verwendet wird, da in diesem Fall die Fokussierung unzureichend sein kann oder eine leichte Handbewegung des Benutzers ein leicht verschwommenes Bild verursacht. Aufgrund der Tatsache, dass beispielsweise nach der Aufnahme die Inhalte einer DIN-A4-Seite auf dem kleinen Display einer Digitalkamera wiedergegeben werden, ist es für den Benutzer nicht möglich, leichte Fokussierungsfehler oder die Verschwommenheit der Aufnahme zu erkennen.

Der vorliegenden Erfindung liegt die Aufgabe zugrunde, ein Verfahren anzugeben, mittels dessen die Qualität einer mittels einer Digitalkamera oder eines Gerätes, welches eine Digitalkamera umfasst oder mit einer Digitalkamera verbindbar ist, erstellten Aufnahme objektiv ermittelt werden kann. Dadurch soll gewährleistet werden, dass z.B. für den Fall, dass die Aufnahme zum Zweck des Scannens einer Text- und/oder Zeichnungen bzw. Skizzen umfassenden Oberfläche erstellt worden ist, die Inhalte der zu scannenden Oberfläche bzw. der Text und/oder die Zeichnungen eindeutig erkennbar wiedergegeben werden.

Diese Aufgabe wird durch die Merkmale des Patentanspruches 1 gelöst. Weitere Ausgestaltungen und Vorteile gehen aus den Unteransprüchen hervor.

Demnach wird der Begriff der "Lesbarkeit" eingeführt, welcher die Menge der Qualitätseigenschaften darstellt, welche die Lesbarkeit eines mittels einer Digitalkamera aufgenommenen Dokumentes sowie die eindeutige Erkennung der darin enthaltenen Einzelheiten gewährleisten. Des weiteren wird als Lesbarkeitsindex (Readability Index, RI) die gewichtete und normierte Kombination der Messwerte dieser Qualitätseigenschaften bezeichnet, anhand deren der Benutzer erkennen kann, ob die in seiner Digitalkamera bzw. eines Gerätes, welches eine Digitalkamera umfasst oder mit einer Digitalkamera verbindbar ist, gewonnene Aufnahme objektiv lesbar ist oder nicht.

Im Rahmen des erfindungsgemäßen Verfahrens wird vorzugsweise automatisch zumindest ein kleiner Bereich in der Mitte der Aufnahme ausgewählt; anhand der Auswertung der Bildqualität in diesem Bereich wird die Qualität der gesamten Aufnahme geschätzt. Durch die Auswahl eines Bereiches in der Mitte der Aufnahme wird vorausgesetzt, dass der wichtigere Teil des aufgenommenen Dokumentes oder der Aufnahme im allgemeinen vom Benutzer in die Mitte der Aufnahme platziert ist. Es ist natürlich auch möglich, dass der Benutzer einen anderen nicht mittig gelegenen Bereich der Aufnahme zur Durchführung des Verfahrens auswählt.

Die vorliegende Erfindung geht davon aus, dass die Parameter digitales Rauschen, Kontrastkanten, Kontrast und Helligkeit die Erkennung der Details einer Aufnahme im wesentlichen beeinflussen, sodass diese Parameter mittels herkömmlicher Bildverarbeitungsverfahren für den zumindest einen ausgewählten Bereich berechnet werden. Im Rahmen weiterer Varianten des erfindungsgemäßen Verfahrens ist es möglich, weitere Bildqualitätsparameter heranzuziehen, wie beispielsweise geometrische Verzerrung, Schatten- oder Lichtreflexionseffekte etc.

Anhand der auf diese Weise berechneten Parameter wird der aus diesen Parametern zusammengesetzte Lesbarkeitsindex berechnet. Hierbei wird jeder der Parameter lokal bzw. punktuell berechnet und über den ausgewählten Bereich integriert. Durch diese Vorgehensweise ergeben sich z.B. für drei Parameter drei Werte, i1, i2 und i3; anschließend werden die Resultate der Integration über den ausgewählten Bereich normiert, wodurch sich die normierten Werte I1, I2 und I3 ergeben. Der Lesbarkeitsindex RI wird als die gewichtete Summe der normierten Werte berechnet.

Die Auswahl der Gewichtungsfaktoren entspricht gemäß der Erfindung der aktuellen in Digitalkameras verwendeten Technologie.

Im Rahmen einer vorteilhaften Variante der Erfindung wird der Lesbarkeitsindex RI wie folgt definiert: RI = I1*0,1+I2*0,7+I3*0,2, wobei I1 der normierte Wert für das digitale Rauschen, I2 der normierte Wert für die Kontrastkanten und I3 der normierte Wert für Helligkeit und Kontrast ist.

Es kann erfindungsgemäß vorgesehen sein, dass vor der Benutzung eines eine Digitalkamera umfassenden oder eines mit einer Digitalkamera verbindbaren elektronischen Gerätes bzw. einer bestimmten Digitalkamera mittels des Verfahrens eine Kalibrierung der Gewichtungsfaktoren durchgeführt wird, um den Lesbarkeitsindex z. B. gemäß den Wünschen bzw. den subjektiven Wahrnehmungen der Benutzer anzupassen.

Nach der Berechnung des Lesbarkeitsindex wird dieser (beispielsweise auf einer Skala von 0 bis 100) normiert und dem Benutzer angezeigt. Hierbei entsprechen bestimmte Bereiche der Skala den Bezeichnungen schlecht, ausreichend, gut, exzellent, etc., welche auch dem Benutzer angezeigt werden können, um auf diese Weise die Handhabung des Verfahrens zu vereinfachen.

Das erfindungsgemäße Verfahren weist den Vorteil auf, dass es aufgrund des geringen Speicher- und Ressourcenbedarfs (da für die Auswertung der Bildqualität bzw. der entsprechenden Parameter ein kleiner Bereich des Bildes verwendet wird) in jedem herkömmlichen Gerät, welches eine Digitalkamera umfasst oder mit einer Digitalkamera verbindbar ist, implementiert werden kann, wobei der Lesbarkeitsindex sehr schnell bzw. in Echtzeit dem Benutzer angezeigt werden kann. Des weiteren kann das erfindungsgemäße Verfahren auch zu anderen Zwecken eingesetzt werden, wie beispielsweise bei der Kalibrierung von Computermonitoren oder bei der Umwandlung bzw. Verkleinerung von digital aufgenommenen Bildern.

## Patentansprüche

1. Verfahren zur Ermittlung der Qualität einer Aufnahme, welche mittels einer Digitalkamera, eines einer Digitalkamera umfassenden oder mittels eines mit einer Digitalkamera verbindbaren elektronischen Gerätes erstellt worden ist, **dadurch gekennzeichnet, dass** zumindest ein kleiner Bereich ausgewählt wird, wobei Parameter, welche die Erkennung der Details einer Aufnahme beeinflussen, für den zumindest einen ausgewählten Bereich punktuell berechnet und über den ausgewählten Bereich integriert werden und wobei aus den für diese Parameter gewonnenen Werten ein Lesbarkeitsindex berechnet wird, welcher die gewichtete Summe der normierten gewonnenen Werte für die Parameter ist, wobei die Auswahl der Gewichtungsfaktoren der aktuellen in Digitalkameras verwendeten Technologie entspricht.

2. Verfahren zur Ermittlung der Qualität einer Aufnahme nach Anspruch 1, **dadurch gekennzeichnet, dass** als Parameter das digitale Rauschen, die Kontrastkanten und Helligkeit und Kontrast verwendet werden.

3. Verfahren zur Ermittlung der Qualität einer Aufnahme nach Anspruch 2, **dadurch gekennzeichnet, dass** der Lesbarkeitsindex RI wie folgt definiert ist: RI = I1*0,1+I2*0,7+I3*0,2, wobei I1 der normierte Wert für das digitale Rauschen, I2 der normierte Wert für die Kontrastkanten und I3 der normierte Wert für Helligkeit und Kontrast ist.

4. Verfahren zur Ermittlung der Qualität einer Aufnahme nach einem der vorangehenden Ansprüche, **dadurch gekennzeichnet, dass** der zumindest eine Bereich automatisch in der Mitte der Aufnahme ausgewählt wird.

5. Verfahren zur Ermittlung der Qualität einer Aufnahme nach einem der vorangehenden Ansprüche 1 bis 3, **dadurch gekennzeichnet, dass** der zumindest eine Bereich vom Benutzer ausgewählt werden kann.

6. Verfahren zur Ermittlung der Qualität einer Aufnahme nach einem der vorangehenden Ansprüche, **dadurch gekennzeichnet, dass** nach der Berechnung des Lesbarkeitsindex dieser normiert und dem Benutzer angezeigt wird.

7. Verfahren zur Ermittlung der Qualität einer Aufnahme nach einem der vorangehenden Ansprüche, **dadurch gekennzeichnet, dass** vor der Benutzung eines eine Digitalkamera umfassenden oder eines mit einer Digitalkamera verbindbaren elektronischen Gerätes bzw. einer bestimmten Digitalkamera mittels des Verfahrens eine Kalibrierung der Gewichtungsfaktoren durchgeführt wird, um den Lesbarkeitsindex gemäß den Wünschen bzw. den subjektiven Wahrnehmungen der Benutzer anzupassen.
